# EUROPÄISCHE PATENTSCHRIFT

(11) **EP 2 808 983 B1**
(45) Veröffentlichungstag und Bekanntmachung des Hinweises auf die Patenterteilung: **14.09.2016**
(21) Anmeldenummer: 13002767.5
(22) Anmeldetag: 28.05.2013
(51) Int. Cl.: G01D 5/245, G01B 7/30, H02K 11/215, G01D 5/14

(54) **Encoder für einen kompakten Drehgeber und Elektromotor mit einem kompakten Drehgeber**
Encoder for a compact rotary encoder and electric motor with a compact rotary encoder
Encodeur pour un capteur rotatif compact et moteur électrique doté d'un capteur rotatif compact

(43) Veröffentlichungstag der Anmeldung: 03.12.2014
(73) Patentinhaber: Lakeview Innovation Ltd., 6374 Buochs (CH)
(72) Erfinder: Schwarz, Volker, 6072 Sachseln (CH); Philipp, Andreas, 6072 Sachseln (CH)
(74) Vertreter: Grünecker Patent- und Rechtsanwälte PartG mbB

(56) Entgegenhaltungen:
- DE-A1- 2 245 557
- DE-A1-102008 060 896
- DE-B3-102006 044 525
- JP-A- S61 280 753
- JP-A- 2004 191 126
- US-A1- 2009 261 693
- US-A1- 2010 176 695
- US-A1- 2011 037 354
- US-A1- 2012 229 127

## Beschreibung

Die vorliegende Erfindung betrifft einen Encoder für einen Drehgeber nach dem Oberbegriff des unabhängigen Anspruchs 1. Der Encoder ist derart ausgebildet, dass er zur Abtastung einer rotationssymmetrischen Maßverkörperung geeignet ist.

Drehgeber sind aus dem Stand der Technik hinlänglich bekannt. Sie dienen zur Erfassung eines Drehwinkels und finden insbesondere in Elektromotoren Verwendung. Über den Drehgeber kann nicht nur die rotatorische Position des Läufers, sondern auch dessen Drehgeschwindigkeit bestimmt werden. Drehgeber werden in den unterschiedlichsten Ausführungen hergestellt und können auf den unterschiedlichsten physikalischen Prinzipien beruhen. Die Möglichkeiten reichen von einer rein mechanischen Abtastung über optische Erfassungsverfahren bis hin zu Sensoriken auf Hallsensor-Basis.

Das Grundprinzip eines Drehgebers beruht auf der Abtastung einer im Wesentlichen rotationssymmetrischen Maßverkörperung durch einen geeigneten Sensor. Der Sensor ist Teil eines Encoders, der die Position oder Drehgeschwindigkeit der rotierenden Maßverkörperung in Form eines Ausgangssignals ausgibt. Drehgeber können mit Encodern bestückt sein, die am Außenumfang der Maßverkörperung angeordnet sind. Beispiel hierfür wäre ein inkrementeller Drehgeber mit magnetischer Abtastung. Bei diesem Drehgeber besteht die Maßverkörperung aus einem hartmagnetischen Träger, in den durch Magnetisierung eine sich wiederholende, periodische Teilung eingeschrieben wurde. Eine derartige Maßverkörperung wird als Polrad mit radialer Feldwirkung bezeichnet. Bei dem am Außenumfang des Polrads positionierten Sensors kann es sich um ein Hall-Element oder um einen magnetoresistiven Sensor handeln. Beide Alternativen ermöglichen ein berührungsloses Auslesen der periodisch wiederkehrenden Magnetisierung des Polrads. Der Drehgeber kann jedoch auch so ausgeführt sein, dass der Sensor nicht am Außenumfang sondern in axialer Richtung betrachtet vor oder hinter der Maßverkörperung angeordnet ist. Insbesondere Drehgeber, die auf einer optischen Abtastung beruhen, weisen in der Regel diese zweite mögliche Bauweise auf. Beide Lösungen haben gewisse Vor- und Nachteile. Was die Platzverhältnisse betrifft, bauen Drehgeber mit am Außenumfang der Maßverkörperung positioniertem Sensor relativ kurz. Der benötigte Bauraum in radialer Richtung bestimmt sich im Wesentlichen über die Größe des Sensors. Selbst bei Verwendung eines relativ flachen konventionell gehäusten Sensors, beispielsweise eines Hall-Sensors, ergibt sich insbesondere bei Drehgebern mit geringem Durchmesser das Problem, dass das Sensorgehäuse aufgrund seiner erforderlichen Mindestabmaße sozusagen tangential am Außenumfang der Maßverkörperung absteht und so zu relativ großen Gesamtabmaßen des Drehgebers beiträgt.

Bei vielen Elektromotoren wird der Drehgeber in das Gehäuse des Elektromotors integriert. Speziell bei Elektrokleinmotoren und -kleinstmotoren kann der Einbau eines Drehgebers dazu führen, dass das Motorgehäuse insgesamt etwas größer gewählt werden muss als erwünscht.

Ein Elektromotor mit einem scheibenförmig ausgebildeten Drehgeber und einem am Außenumfang der Scheibe positionierten Sensor ist beispielsweise aus EP 2584678 A2 bekannt.

Ein Drehgeber, der innerhalb einer holzylindrischen Rotorspule eines Elektromotors angeordnet ist, ist beispielsweise aus der US 2010/176695 A1 bekannt.

Ein Drehgeber, der an einem Halter befestigt und rückseitig am Motor montiert wird, ist beispielsweise aus der US 2012/229127 A1 bekannt.

Aufgabe der vorliegenden Erfindung ist es, einen Encoder für einen Drehgeber anzugeben, der eine kompakte Bauweise des Drehgebers ermöglicht.

Die Aufgabe wird gelöst durch die Merkmale des unabhängigen Anspruchs 1. Demnach liegt bei einem Encoder der eingangs genannten Art dann eine erfindungsgemäße Lösung der Aufgabe vor, wenn der Encoder zumindest einen integrierten Sensorschaltkreis umfasst, wobei der integrierte Sensorschaltkreis biegsam ausgeführt und auf eine ebenfalls biegsame Leiterplatte aufgebracht ist, und wobei der integrierte Sensorschaltkreis und die Leiterplatte eine biegsame Sensoreinheit bilden, und die Sensoreinheit aus einer Ebene herausgebogen ist.

Als Sensorschaltkreis kommen alle Arten von dünnen, biegsamen integrierten Halbleiterschaltkreisen, insbesondere auf Silizium-Basis, infrage. Ein Verfahren zur Herstellung von flexiblen integrierten Schaltkreisen ist beispielsweise aus DE 102006044525 B3 bekannt. Vorzugsweise umfasst der Sensorschaltkreis bereits den Signalverarbeitungsschaltkreis, welcher die Positions- oder Geschwindigkeitsdaten als Ausgangssignal bereitstellt. Der Signalverarbeitungsschaltkreis kann jedoch auch separat vorgesehen sein, und zwar entweder ebenfalls in biegsamer Form auf der biegsamen Leiterplatte, oder aber auch extern bzw. auf oder in einem weiteren Bauteil des Encoders bzw. Drehgebers.

Im Rahmen der vorliegenden Anmeldung soll unter dem Begriff "biegsame Leiterplatte" insbesondere auch eine biegsame Leiterfolie verstanden werden. Die biegsame Leiterplatte dient zum Anschluss des integrierten Sensorschaltkreises, beispielsweise an eine geeignete Auswerteeinheit oder an die Elektronik eines Elektromotors.

Durch die gebogene Form der Sensoreinheit kann verhindert werden, dass der Encoder unnötigen Bauraum einnimmt, was zu einer äußerst kompakten Bauweise des Drehgebers führt. Sofern die Sensoreinheit beispielsweise am Außenumfang einer Maßverkörperung angeordnet ist, kann die Sensoreinheit derart gebogen sein, dass sie sich an die Oberfläche der Maßverkörperung anschmiegt. Im Vergleich zu konventionell gehäusten Sensorchips, die tangential vom Außenumfang der Maßverkörperung abstehen, ermöglicht die vorliegende Erfindung die Schaffung eines Drehgebers, dessen Durchmesser lediglich unwesentlich größer ist als der Durchmesser seiner Maßverkörperung. Selbstverständlich muss zwischen der Maßverkörperung und der Sensoreinheit ein gewisser Mindestabstand eingehalten werden, um zu verhindern, dass sich die beiden Bauteile berühren. Die Sensoreinheit kann derart gebogen sein, dass der integrierte Sensorschaltkreis in Umfangsrichtung der Maßverkörperung betrachtet, über seine gesamte Länge einen einheitlichen Abstand zur Maßverkörperung aufweist. Bei gegebenem maximalen Toleranzabstand steigt dadurch die nutzbare Anzahl der Teilungen der Maßverkörperung an. Sofern es sich bei der Maßverkörperung um ein Polrad mit radialer Feldwirkung handelt, werden durch die erfindungsgemäße Ausführung der Sensoreinheit auch Feldverzerrungen kompensiert, da der Sensorschaltkreis über seine gesamte Länge sozusagen senkrecht zur radialen Feldwirkung ausgerichtet ist.

Vorteilhafte Ausgestaltungen der vorliegenden Erfindung sind Gegenstand der Unteransprüche.

In einer besonders bevorzugten Ausführungsform der vorliegenden Erfindung ist die Sensoreinheit derart gebogen, dass sie sich an die Oberfläche eines Rotationskörpers anschmiegt. Da es sich bei der Maßverkörperung eines Drehgebers grundsätzlich um einen im Wesentlichen rotationssymmetrischen Körper handelt, können dadurch die oben bereits angesprochenen Vorteile erreicht werden.

Drehgeber werden in der Regel mit zylindrischen bzw. hohlzylindrischen Maßverkörperungen ausgerüstet. Es ist daher von Vorteil, wenn sich die Sensoreinheit an die Oberfläche eines Zylinders anschmiegt. Dabei bedeckt die Sensoreinheit in der Regel nur einen Sektor einer Zylinderfläche. Es ist jedoch auch denkbar, dass die Sensoreinheit, oder zumindest die flexible Leiterplatte der Sensoreinheit, einen vollständigen oder nahezu vollständigen hohlzylindrischen Ring bildet.

Ein geschlossener oder nahezu geschlossener Ring sorgt für eine hohe Eigenstabilität der Sensoreinheit, wodurch der Abstand zur Maßverkörperung des Drehgebers äußerst gering gehalten werden kann.

In einer weiteren bevorzugten Ausführungsform der vorliegenden Erfindung schmiegt sich die Sensoreinheit an eine Rotationsfläche an, deren Durchmesser weniger als 35 mm beträgt. Vorzugsweise handelt es sich bei der Rotationsfläche um eine Zylinderfläche. Die oben beschriebenen Vorteile machen sich umso stärker bemerkbar, je kleiner der Durchmesser der Maßverkörperung ist. Drehgeber mit einem erfindungsgemäßen Encoder eigenen sich daher vorzugsweise zum Einbau in Elektrokleinmotoren bzw. Mikromotoren mit einem Durchmesser von weniger als 35 mm.

In einer weiteren besonders bevorzugten Ausführungsform der vorliegenden Erfindung handelt es sich bei dem Sensorschaltkreis um einen hochintegrierten biegsamen Chip auf Hallsensor-Basis. Bei dieser Ausführungsform ist der Drehgeber vorzugsweise mit einem Polrad ausgerüstet. Hochintegrierte Chips auf Hallsensor-Basis gewährleisten dabei eine hohe Präzision der Abtastung und lassen sich darüber hinaus auch äußerst kompakt ausführen. Möglich sind auch kapazitive, induktive, magnetoresistive oder optische Sensortechnologien. Auch ist es denkbar, den Sensorchip mittels organischer Materialien wie z.B. Polymere zu realisieren. Die mikroelektronischen Bauelemente und Leiterbahnen eines derartigen Sensorchips könnten aus leitfähigen organischen Molekülen, sogenannten organischen Halbleitern, gefertigt werden. Derartige Sensorchips aus organischen Materialien könnten vorzugsweise auf dem Prinzip der optischen Abtastung beruhen.

In einer weiteren besonders bevorzugten Ausführungsform der vorliegenden Erfindung umfasst der Encoder ferner einen starren Träger, an dem die Sensoreinheit in gebogener Form befestigt ist. Der Träger gewährleistet, dass die Sensoreinheit ihre gebogene Form beibehält und ermöglicht zudem die exakte Positionierung der Sensoreinheit in Bezug auf die abzutastende Maßverkörperung des Drehgebers. Der Träger gewährleistet somit, dass der erforderliche Mindestabstand zur Maßverkörperung exakt eingehalten wird. Vorzugsweise weist der starre Träger elektrische Kontaktstellen zum Anschluss der Sensoreinheit auf, wobei elektrische Kontaktstellen der Sensoreinheit mit den Kontaktstellen des starren Trägers leitend verbunden sind. Bei den Kontaktstellen der Sensoreinheit kann es sich um einfache Endabschnitte von Leiterbahnen der flexiblen Leiterplatte handeln. Der starre Träger kann kostengünstig als konventionelle starre Leiterplatte ausgeführt sein. Hohe Präzision bzw. Stabilität bietet hingegen ein Träger aus Keramik. Auch Träger aus einem Metalldrahtgitter oder sogenannte 3D-MID (Moulded Interconnect Devices)- Kunststoffträger mit integrierten Leiterbahnen sind denkbar.

Um die elektrischen Kontaktstellen der Sensoreinheit mit den elektrischen Kontaktstellen des starren Trägers leitend zu verbinden, können diese entweder herkömmlich miteinander verlötet oder verschweißt werden. Da die Sensoreinheit des erfindungsgemäßen Encoders ein relativ empfindliches Bauteil darstellt, biete sich alternativ an, die Kontaktstellen mittels eines elektrisch leitenden Klebers miteinander zu verkleben. Der starre Träger ist vorzugsweise mit einem Anschlusskabel oder zumindest mit elektrischen Anschlüssen versehen, um den erfindungsgemäßen Encoder an eine entsprechende Auswerteeinheit oder an die Elektronik eines Elektromotors anschließen zu können. Dabei sind die Kontaktstellen des starren Trägers, vorzugsweise über Leiterbahnen, leitend mit dem Anschlusskabel bzw. den elektrischen Anschlüssen verbunden.

Besonders bevorzugt ist der starre Träger ringförmig ausgebildet. Ein ringförmiger Träger lässt sich besonders einfach herstellen. Auch die exakte Positionierung der Sensoreinheit in Bezug auf die Maßverkörperung des Drehgebers bzw. in Bezug auf die Rotorachse eines Elektromotors wird mittels eines ringförmig ausgebildeten Trägers erheblich erleichtert. Ganz besonders bevorzugt ist die Sensoreinheit am Außenumfang des ringförmigen Trägers entsprechend befestigt. Beispielsweise kann die Sensoreinheit am Außenumfang des Trägers mit diesem verklebt sein. Die Ringform des starren Trägers sorgt dafür, dass die Sensoreinheit beim Befestigungsvorgang automatisch in die richtige Form gebogen wird. Der Außenumfang des starren Trägers ist vorzugsweise geringfügig größer als der Außenumfang der abzutastenden Maßverkörperung des Drehgebers. Dies gewährleistet, dass der erforderliche Mindestabstand zwischen Sensoreinheit und Maßverkörperung eingehalten wird. Selbstverständlich ist es auch möglich, den starren Träger lediglich als Segment eines vollständig geschlossenen Rings auszuführen. Die Ringform bietet jedenfalls den Vorteil, dass auch der Drehgeber, in dem der erfindungsgemäße Encoder zum Einsatz kommt, ringförmig ausgebildet sein kann. Der Drehgeber kann dadurch beispielsweise auch in Elektromotoren mit durchgehender Welle eingebaut werden. Es wird darauf hingewiesen, dass der Träger alternativ beispielsweise auch als kreisförmige Scheibe ausgebildet sein kann. Auch am Außenumfang eines scheibenförmigen Trägers kann die Sensoreinheit auf einfache Weise angebracht werden.

In einer weiteren bevorzugten Ausführungsform umfasst die Leiterplatte einen Anschlussabschnitt, der aus dem Encoder nach außen geführt und dazu geeignet ist, den Encoder an eine entsprechende Auswerteeinheit oder an die Elektronik eines Elektromotors anzuschließen. Bei dieser Ausführungsform dient die Leiterplatte selbst als Anschlussverbindung. Der Träger kann dabei entfallen. Dadurch wird der Encoder nochmals kompakter. Dies ist insbesondere vorteilhaft, wenn der Encoder in einen sehr kleinen Elektromotor eingebaut werden soll, der keinen Platz für einen zusätzlichen Träger bietet. Die gebogene Leiterplatte ist vorzugsweise T-förmig ausgeführt, wobei der Querstrich des T zusammen mit dem integrierten Sensorschaltkreis die biegsame Sensoreinheit bildet. Der Fuß des T stellt hingegen die Anschlussverbindung dar. Vorzugsweise werden auch die Wicklungsanschlüsse des Elektromotors an die biegsame Leiterplatte angeschlossen, so dass die Leiterplatte alle erforderlichen Anschlüsse des Elektromotors aufweist. Dadurch kann eine ansonsten zusätzlich erforderliche Leiterplatte eingespart werden.

In einer weiteren bevorzugten Ausführungsform der vorliegenden Erfindung umfasst der Encoder ferner ein Gehäuse, das die Sensoreinheit und gegebenenfalls den Träger zumindest teilweise umgibt. Ein derartiges Gehäuse sorgt für eine hohe Stabilität des Encoders und eine exakte Positionierung der Sensoreinheit. Zudem vereinfacht das Gehäuse die Montage des Encoders, beispielsweise in dem Gehäuse eines Elektromotors, in dem der Drehgeber eingesetzt werden soll. Dabei ist es möglich, dass die Sensoreinheit etwas aus dem Gehäuse hervorsteht, so dass eine Abtastung der Maßverkörperung, beispielsweise bei Verwendung eines optischen Sensors, gewährleistet bleibt. Zumindest bei der Abtastung eines magnetischen Polrads ist es auch möglich, dass auch die Sensoreinheit vollständig von dem Gehäuse umgeben ist. Dadurch wird die Robustheit des Encoders zusätzlich erhöht. Kostengünstig und auf einfache Weise lässt sich das Gehäuse realisieren, indem die Sensoreinheit und gegebenenfalls der Träger mit Kunststoff umspritzt oder vergossen werden.

In einer weiteren besonders bevorzugten Ausführungsform der vorliegenden Erfindung beträgt die Dicke der Sensoreinheit weniger als 0,25 mm, vorzugsweise weniger als 0,1 mm. Dadurch lässt sich die Sensoreinheit auf einfache Weise in die gewünschte Form biegen und in der gewünschten Form am Träger befestigen. Zudem sorgt diese Ausführungsform für eine besonders kompakte Bauweise des Drehgebers.

Die vorliegende Erfindung stellt auch einen Drehgeber mit einem erfindungsgemäßen Encoder bereit. Der Drehgeber umfasst den Encoder und eine durch die Sensoreinheit des Encoders abzutastende, rotationssymmetrische Maßverkörperung. Vorzugsweise ist die Sensoreinheit derart gebogen und bezüglich der Maßverkörperung gehalten, dass der Sensorschaltkreis einen einheitlichen Abstand zur Maßverkörperung aufweist. Der einheitliche Abstand liegt vorzugsweise im Bereich zwischen 0,2 mm und 0,5 mm. Bei einem Abstand im genannten Bereich wird einem gewissen Sicherheitsfaktor Rechnung getragen, um eine Berührung der beiden Bauteile im Betrieb zu verhindern. Gleichzeitig wird trotzdem eine kompakte Bauweise erzielt.

Die Erfindung stellt ferner einen Elektromotor mit einem Drehgeber bereit, welcher über einen erfindungsgemäßen Encoder verfügt. Vorzugsweise handelt es sich bei der Maßverkörperung des Drehgebers nicht um die Rotor- bzw. Statormagnete des Elektromotors, sondern um eine zusätzlich vorgesehene Maßverkörperung, beispielsweise in Form eines Polrads mit einer besonders feinen Teilung, um die Winkelposition bzw. Drehgeschwindigkeit des Rotors besonders präzise erfassen zu können. Typische realisierbare magnetische Teilungsperioden liegen zwischen 0,5 mm und 5 mm.

Die Erfindung wird im Folgenden anhand von Zeichnungen näher erläutert.

Es zeigen:
- Fig. 1:: Eine perspektivische Ansicht eines erfindungsgemäßen Drehgebers,
- Fig. 2:: Den erfindungsgemäßen Drehgeber aus Fig. 1 in einer Vorderansicht,
- Fig. 3:: Eine Detailansicht des erfindungsgemäßen Drehgebers aus Fig. 2,
- Fig. 4:: Einen Längsschnitt des erfindungsgemäßen Drehgebers aus den Figuren 1 bis 3 entlang der in Fig. 2 eingezeichneten Schnittlinie IV, und
- Fig. 5:: Eine perspektivische Ansicht des Trägers des erfindungsgemäßen Drehgebers aus den Figuren 1 bis 4 mit daran zu befestigender Sensoreinheit.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht eingegangen wird, so wird auf vorhergehende oder nachfolgende Figurenbeschreibungen Bezug genommen.

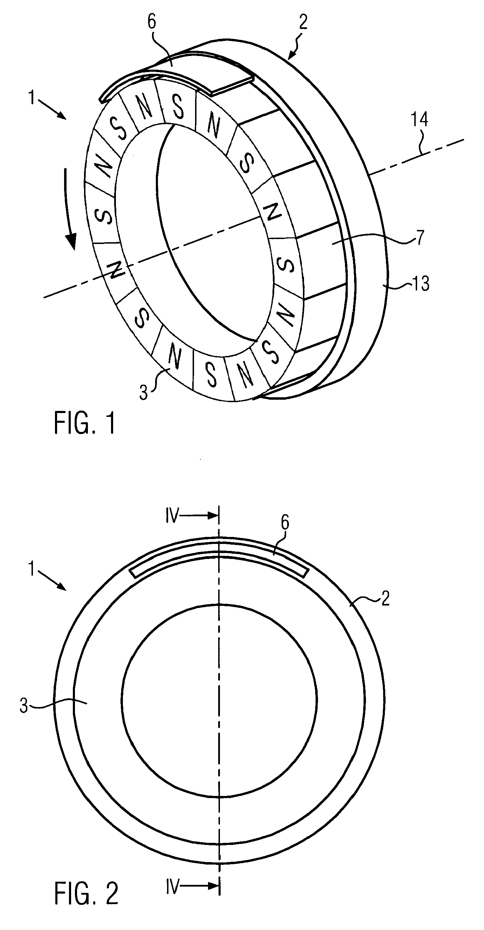

Fig. 1 zeigt ein Ausführungsbeispiel eines erfindungsgemäßen Drehgebers 1 in Schrägansicht. Der Drehgeber besteht aus einer drehbar gelagerten Maßverkörperung 3 in Form eines Polrads und einem Encoder 2 zur Abtastung der Maßverkörperung. Das Lager der Maßverkörperung ist nicht dargestellt. Es kann vorgesehen sein, dass die Maßverkörperung nicht über ein eigenes Lager verfügt, sondern zum Beispiel fest mit dem drehbar gelagerten Rotor eines Elektromotors verbunden ist. Das Polrad ist im Wesentlichen als hohlzylindrisches bzw. ringförmiges Bauteil ausgeführt und verfügt über eine in Fig. 1 angedeutete magnetische Teilung.

Der Encoder 2 des erfindungsgemäßen Drehgebers verfügt über ein ebenfalls ringförmig ausgebildetes Gehäuse 13, welches koaxial zur Maßverkörperung angeordnet ist. Die gemeinsame Achse 14 entspricht der Drehachse der Maßverkörperung 3. Der Encoder 2 ist im Gegensatz zur Maßverkörperung ortsfest gehalten, beispielsweise in dem Gehäuse eines Elektromotors. Aus dem Gehäuse 13 des Encoders 2 steht eine Sensoreinheit 6 hervor. Die Sensoreinheit 6 wird durch das Gehäuse 13 derart gehalten, das sie sich direkt am Außenumfang 7 der drehbaren Maßverkörperung 3 befindet.

In Fig. 2 ist zu erkennen, dass die Sensoreinheit 6 eine gebogene Form aufweist. Sie schmiegt sich quasi an den zylindrischen Außenumfang 7 der hohlzylindrischen Maßverkörperung 3 an. Jedoch verbleibt zwischen der Sensoreinheit 6 und der Maßverkörperung ein geringer Luftspalt von etwa 0,2 mm. Hierdurch wird gewährleistet, dass sich die Maßverkörperung frei gegenüber der Sensoreinheit 6 des Encoders drehen kann.

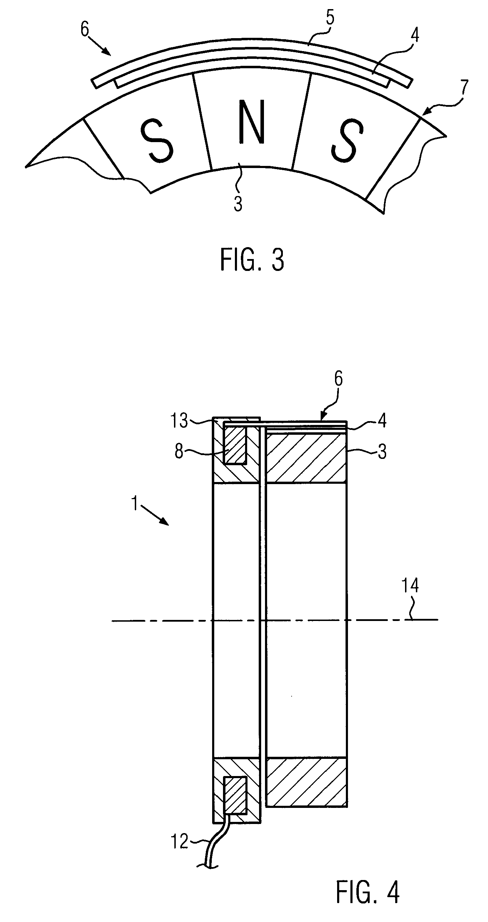

Wie die Detailansicht aus Fig. 3 zeigt, besteht die Sensoreinheit aus einer biegsamen Leiterplatte 5 und einem darauf aufgebrachten Sensorschaltkreis 4. Der Sensorschaltkreis 4 ist ebenfalls biegsam ausgeführt und beruht auf dem Hallsensor-Prinzip. Hochintegrierte Chips auf Hallsensor-Basis können extrem kompakt ausgeführt werden und gewährleisten eine äußerst zuverlässige und präzise Abtastung des magnetischen Polrads. In Fig. 3 ist auch zu erkennen, dass der Sensorschaltkreis 4 über seine gesamte Länge einen einheitlichen Abstand zum Außenumfang der Maßverkörperung aufweist. Der Abstand entspricht dem bereits weiter oben angesprochenen Luftspalt von etwa 0,2 mm.

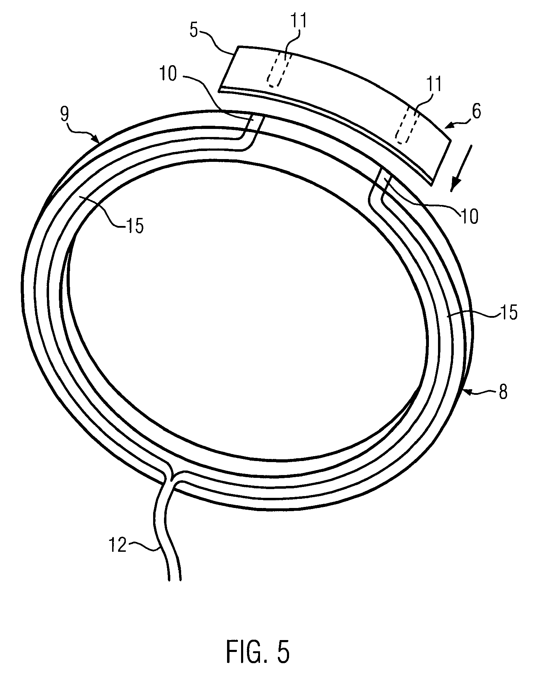

Die Leiterplatte 5 der Sensoreinheit 6 erfüllt zwei Funktionen. Zum einen dient sie zum elektrischen Anschluss des Sensorschaltkreises 4, und zum anderen übernimmt Sie auch die Funktion der mechanischen Halterung des Sensorschaltkreises. Sie ist zu diesem Zweck an einem starren Träger 8 befestigt, wie dies in Fig. 4 gezeigt ist. Der starre Träger 8 ist eine ringförmig ausgebildete starre Leiterplatte. Wie in Fig. 5 zu erkennen, wird die flexible Leiterplatte 5 der Sensoreinheit 6 auf den zylindrischen Außenumfang 9 des starren Trägers 8 aufgesetzt. Die Leiterplatte wird am Träger anschließend geeignet befestigt. Beispielsweise kann sie mit dem Träger verklebt werden. Beim Befestigungsvorgang wird die Sensoreinheit automatisch in die gewünschte gebogene Form gebracht. Die Sensoreinheit wird derart auf den starren Träger aufgesetzt, dass die in Fig. 5 dargestellten elektrischen Kontakte 11 der Sensoreinheit 6 in Kontakt mit den elektrischen Kontaktstellen 10 des starren Trägers 8 gebracht werden. Die Kontaktstellen werden entweder miteinander verschweißt oder verlötet, oder mittels eines elektrisch leitenden Klebers miteinander verklebt.

Der Träger 8 verfügt über Leiterbahnen 15, über die die Kontaktstellen 10 mit einem Anschlusskabel 12 des Encoders verbunden sind. Über das Anschlusskabel kann der Encoder an die Elektronik eines Elektromotors oder an eine entsprechende Auswerteeinheit angeschlossen werden.

Das in den Figuren 1, 2 und 4 gezeigte Gehäuse 13 des Encoders 2 kann auf einfache Weise im Spritzgussverfahren hergestellt werden. Träger 8 und Sensoreinheit 6 werden dazu mit einer Kunststoffmasse umspritzt oder vergossen.

Es wird darauf hingewiesen, dass auch der Encoder bzw. das Encodergehäuse den drehbar gelagerten Teil des erfindungsgemäßen Drehgebers darstellen kann. In diesem Fall ist die Maßverkörperung ortsfest gehalten.

## Patentansprüche

1. Encoder (2) für einen Drehgeber (1), insbesondere für einen Elektromotor, zur Abtastung einer rotationssymmetrischen Maßverkörperung (3), **dadurch gekennzeichnet, dass** der Encoder (2) zumindest einen integrierten Sensorschaltkreis (4) umfasst, wobei der integrierte Sensorschaltkreis (4) biegsam ausgeführt und auf eine ebenfalls biegsame Leiterplatte (5) aufgebracht ist, und wobei der integrierte Sensorschaltkreis (4) und die Leiterplatte (5) eine biegsame Sensoreinheit (6) bilden, und die Sensoreinheit (6) aus einer Ebene heraus gebogen ist.

2. Encoder (2) nach Anspruch 1, **dadurch gekennzeichnet, dass** die Sensoreinheit (6) derart gebogen ist, dass sie sich an die Oberfläche (7, 9) eines Rotationskörpers anschmiegt.

3. Encoder (2) nach Anspruch 2, **dadurch gekennzeichnet, dass** sich die Sensoreinheit (6) an eine Rotationsfläche, vorzugsweise an eine Zylinderfläche anschmiegt, deren Durchmesser weniger als 35 mm beträgt.

4. Encoder (2) nach einem der Ansprüche 1 bis 3, **dadurch gekennzeichnet, dass** der Sensorschaltkreis (4) ein hochintegrierter biegsamer Chip auf Hallsensor-Basis ist.

5. Encoder (2) nach einem der Ansprüche 1 bis 4, **dadurch gekennzeichnet, dass** der Encoder (2) ferner einen starren Träger (8) umfasst, an dem die Sensoreinheit (6) in gebogener Form befestigt ist.

6. Encoder (2) nach Anspruch 5, **dadurch gekennzeichnet, dass** der starre Träger (8) ringförmig ausgebildet ist, wobei die Sensoreinheit (6) am Außenumfang (9) des ringförmigen Trägers (8) befestigt ist.

7. Encoder (2) nach Anspruch 5 oder 6, **dadurch gekennzeichnet, dass** der starre Träger (8) elektrische Kontaktstellen (10) zum Anschluss der Sensoreinheit (6) aufweist, wobei elektrische Kontaktstellen (11) der Sensoreinheit (6) mit den Kontaktstellen (10) des starren Trägers (8) leitend verbunden sind.

8. Encoder (2) nach einem der Ansprüche 1 bis 6, **dadurch gekennzeichnet, dass** die Leiterplatte (5) einen Anschlussabschnitt umfasst, der aus dem Encoder (2) nach außen geführt und dazu geeignet ist, den Encoder (2) an eine entsprechende Auswerteeinheit oder an die Elektronik eines Elektromotors anzuschließen.

9. Encoder (2) nach einem der Ansprüche 1 bis 8, **dadurch gekennzeichnet, dass** der Encoder (2) ferner eine Gehäuse (13) umfasst, das die Sensoreinheit (6) und gegebenenfalls den Träger (8) zumindest teilweise umgibt.

10. Encoder (2) nach einem der Ansprüche 1 bis 9, **dadurch gekennzeichnet, dass** die Dicke der Sensoreinheit (6) weniger als 0,25 mm, vorzugsweise weniger als 0,1 mm beträgt.

11. Drehgeber (1) mit einem Encoder (2) nach einem der Ansprüche 1 bis 10 und einer durch die Sensoreinheit (6) des Encoders (2) abzutastenden rotationssymmetrischen Maßverkörperung (3), wobei die Sensoreinheit (6) derart gebogen und bezüglich der Maßverkörperung (3) gehalten ist, dass der Sensorschaltkreis (4) einen einheitlichen Abstand zur Maßverkörperung (3) aufweist.

12. Drehgeber (1) nach Anspruch 11, **dadurch gekennzeichnet, dass** der einheitliche Abstand zwischen 0,2 mm und 0,5 mm beträgt.

13. Elektromotor mit einem Drehgeber (1) nach einem der Ansprüche 11 bis 12.

## Claims

1. Encoder (2) for a revolution transmitter (1), in particular for an electric motor, for sampling a rotationally symmetrical material measure (3), **characterized in that** said encoder (2) comprises at least one integrated sensor circuit (4), where said integrated sensor circuit (4) is designed in a flexible manner and applied to a likewise flexible circuit board (5), and where said integrated sensor circuit (4) and said circuit board (5) form a flexible sensor unit (6), and said sensor unit (6) is curved outwardly from a plane.

2. Encoder (2) according to claim 1, **characterized in that** said sensor unit (6) is curved such that it bears snugly against the surface (7, 9) of a rotational body.

3. Encoder (2) according to claim 2, **characterized in that** said sensor unit (6) bears snugly against a rotation surface, preferably against a cylinder surface whose diameter is less than 35 mm.

4. Encoder (2) according to one of the claims 1 through 3, **characterized in that** said sensor circuit (4) is a highly integrated flexible chip on a Hall-effect sensor basis.

5. Encoder (2) according to one of the claims 1 through 4, **characterized in that** said encoder (2) further comprises a rigid carrier (8) to which said sensor unit (6) is attached in a curved manner.

6. Encoder (2) according to claim 5, **characterized in that** said rigid carrier (8) is designed in a ring-shaped manner, where said sensor unit (6) is attached at the outer circumference (9) of said ring-shaped carrier (8).

7. Encoder (2) according to claim 5 or 6, **characterized in that** said rigid carrier (8) comprises electrical contact points (10) for connecting said sensor unit (6), where electrical contact points (11) of said sensor unit (6) are conductively connected to said contact points (10) of said rigid carrier (8).

8. Encoder (2) according to one of the claims 1 through 6, **characterized in that** said circuit board (5) comprises a connection section which is led from said encoder (2) to the exterior and adapted to connect said encoder (2) to a respective evaluation unit or to the electronics of an electric motor.

9. Encoder (2) according to one of the claims 1 through 8, **characterized in that** said encoder (2) further comprises a casing (13) that surrounds said sensor unit (6) and optionally said carrier (8), at least in part.

10. Encoder (2) according to one of the claims 1 through 9, **characterized in that** the thickness of said sensor unit (6) is less than 0.25mm, preferably less than 0.1 mm.

11. Revolution transmitter (1) with an encoder (2) according to one of the claims 1 through 10 and a rotationally symmetrical material measure (3) to be sampled by said sensor unit (6) of said encoder (2), where said sensor unit (6) is curved and held relative to said material measure (3) such that said sensor circuit (4) has a uniform distance from said material measure (3).

12. Revolution transmitter (1) according to claim 11, **characterized in that** said uniform distance is in a range between 0.2 mm and 0.5 mm.

13. Electric motor with a revolution transmitter (1) according to one of the claims 11 through 12.

## Revendications

1. Encodeur (2) pour un capteur de rotation (1), notamment destiné à un moteur électrique, pour une scrutation ou un balayage d'une échelle de mesure matérialisée (3) à symétrie de rotation,
**caractérisé en ce que** l'encodeur (2) comprend au moins un circuit de capteur (4) intégré, le circuit de capteur (4) intégré est d'une configuration flexible et est rapporté sur une plaque de circuit imprimé (5) également flexible, et le circuit de capteur (4) intégré et la plaque de circuit imprimé (5) forment une unité de capteur (6) flexible, et l'unité de capteur (6) est cintrée hors d'un plan.

2. Encodeur (2) selon la revendication 1, **caractérisé en ce que** l'unité de capteur (6) est cintrée de manière à venir s'adapter à la surface (7, 9) d'un corps de rotation en épousant sa forme.

3. Encodeur (2) selon la revendication 2, **caractérisé en ce que** l'unité de capteur (6) vient s'adapter à une surface de rotation, en épousant sa forme, de préférence une surface cylindrique, dont le diamètre a une valeur de moins de 35 mm.

4. Encodeur (2) selon l'une des revendications 1 à 3, **caractérisé en ce que** le circuit de capteur (4) est une puce à haute intégration, flexible, sur la base d'un détecteur de Hall.

5. Encodeur (2) selon l'une des revendications 1 à 4, **caractérisé en ce que** l'encodeur (2) comprend par ailleurs, un support rigide (8) sur lequel est fixée l'unité de capteur (6) sous sa forme cintrée.

6. Encodeur (2) selon la revendication 5, **caractérisé en ce que** le support rigide (8) est de forme annulaire, l'unité de capteur (6) étant fixée à la périphérie extérieure (9) du support (8) de forme annulaire.

7. Encodeur (2) selon la revendication 5 ou la revendication 6, **caractérisé en ce que** le support rigide (8) présente des zones de contact électrique (10) destinées au raccordement de l'unité de capteur (6), des zones de contact électrique (11) de l'unité de capteur (6) étant reliées de manière conductrice aux zones de contact (10) du support rigide (8).

8. Encodeur (2) selon l'une des revendications 1 à 6, **caractérisé en ce que** la plaque de circuit imprimé (5) comporte un secteur de raccordement, qui sort de l'encodeur (2), et est adapté à raccorder l'encodeur (2) à une unité de traitement de données adéquate ou à l'électronique d'un moteur électrique.

9. Encodeur (2) selon l'une des revendications 1 à 8, **caractérisé en ce que** l'encodeur (2) comprend, par ailleurs, un boitier (13), qui entoure au moins partiellement l'unité de capteur (6) et, le cas échéant, le support (8).

10. Encodeur (2) selon l'une des revendications 1 à 9, **caractérisé en ce que** l'épaisseur de l'unité de capteur (6) vaut moins de 0,25 mm, de préférence moins de 0,1 mm.

11. Capteur de rotation (1) comprenant un encodeur (2) selon l'une des revendications 1 à 10, et une échelle de mesure matérialisée (3) à symétrie de rotation destinée à être scrutée ou balayée par l'unité de capteur (6) de l'encodeur (2), l'unité de capteur (6) étant cintrée et maintenue par rapport à l'échelle de mesure matérialisée (3) de manière telle, que le circuit de capteur (4) présente une distance uniforme à l'échelle de mesure matérialisée (3).

12. Capteur de rotation (1) selon la revendication (11), **caractérisé en ce que** ladite distance uniforme vaut entre 0,2 mm et 0,5 mm.

13. Moteur électrique comprenant un capteur de rotation (1) selon l'une des revendications 11 à 12.
